# EUROPEAN PATENT SPECIFICATION

(11) **EP 4 192 158 B1**
(45) Date of publication and mention of the grant of the patent: **26.03.2025**
(21) Application number: 20948330.4
(22) Date of filing: 07.08.2020
(51) Int. Cl.: H04W 72/0446, H04W 72/02

(54) **COMMUNICATION METHOD, DEVICE AND SYSTEM**
KOMMUNIKATIONSVERFAHREN, -VORRICHTUNG UND -SYSTEM
PROCÉDÉ, DISPOSITIF ET SYSTÈME DE COMMUNICATION

(43) Date of publication of application: 07.06.2023
(73) Proprietor: Huawei Technologies Co., Ltd., Shenzhen, Guangdong 518129 (CN)
(72) Inventor: GUO, Wenting, Shenzhen, Guangdong 518129 (CN); SU, Hongjia, Shenzhen, Guangdong 518129 (CN); DONG, Lei, Shenzhen, Guangdong 518129 (CN); LU, Lei, Shenzhen, Guangdong 518129 (CN)
(74) Representative: Gill Jennings & Every LLP
(86) International application number: PCT/CN2020/107924
(87) International publication number: WO 2022/027629

(56) References cited:
- EP-A1- 3 905 733
- WO-A1-2016/181094
- WO-A1-2020/033088
- WO-A1-2020/134902
- CN-A- 110 731 117
- CN-A- 111 385 765
- US-A1- 2020 113 015
- INTEL CORPORATION: "Summary for AI 7.2.4.2.2 Mode-2 Resource Allocation", 3GPP DRAFT; R1-1907699 - SUMMARY OF 5G V2X MODE 2 V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 16 May 2019 (2019-05-16), Mobile Competence Centre ; 650, route des Lucioles ; F-06921 Sophia-Antipolis Cedex ; France , XP051739984
- INTEL CORPORATION: "Further Considerations on Sidelink Unicast/Groupcast/Broadcast for NR V2X Communication", 3GPP DRAFT; R1-1812492 INTEL - EV2X_SL_UGB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 11 November 2018 (2018-11-11), Mobile Competence Centre ; 650, route des Lucioles ; F-06921 Sophia-Antipolis Cedex ; France , XP051554436

## Description

### TECHNICAL FIELD

This application relates to the field of mobile communication technologies, and in particular, to a communication methods, apparatuses, and computer program.

### BACKGROUND

Direct communication between terminal apparatuses is referred to as sidelink communication. In a sidelink communication process, a terminal apparatus at a transmitting end may send sidelink control information (sidelink control information, SCI) and sidelink data to a terminal apparatus at a receiving end, and the terminal apparatus at the receiving end receives the SCI, and receives and decodes the sidelink data based on the SCI. In a vehicle to everything (vehicle to everything, V2X) system, there are two resource allocation modes for the terminal apparatus at the transmitting end: mode 1 (Mode-1) and mode 2 (Mode-2). In Mode-1, a base station allocates a resource to the terminal apparatus at the transmitting end, meaning that Mode-1 is a mode in which sidelink communication resource allocation is performed based on scheduling by a base station. In Mode-2, the terminal apparatus at the transmitting end selects a resource by itself, meaning that Mode-2 is a mode in which a base station is not required to schedule a resource, but the terminal apparatus autonomously determines a resource for sidelink communication instead.

In Mode-2, the terminal apparatus at the transmitting end triggers resource selection in a slot n, and obtains a sensing result in a resource sensing window (sensing window) defined using slots as a time unit. The terminal apparatus at the transmitting end filters out, based on the sensing result, unavailable time-frequency resources in the resource selection window defined using slots as a time unit, that is, filters out time-frequency resources already occupied for wireless communication, to obtain available time-frequency resources in the resource selection window, and then determines a time-frequency resource for sidelink communication from these available time-frequency resources, to send sidelink data. In Mode-2, when determining the time-frequency resource for sidelink communication, the terminal apparatus at the transmitting end considers only the sensing result of the terminal apparatus at the transmitting end, that is, considers only occupation of radio resources in the vicinity of the terminal apparatus at the transmitting end. In this case, sometimes when the terminal apparatus at the transmitting end sends sidelink data to the terminal apparatus at the receiving end, receiving of the sidelink data by the terminal apparatus at the receiving end is interfered with by wireless communication in the vicinity of the terminal apparatus at the receiving end.

Therefore, Mode 2b (Mode-2b) is provided as an improvement over Mode-2. In Mode-2b, when determining the time-frequency resource for sidelink communication, the terminal apparatus at the transmitting end considers both a sensing result of the terminal apparatus at the transmitting end and the sensing result of the terminal apparatus at the receiving end. In other words, the terminal apparatus at the transmitting end needs to consider both occupation of radio resources in the vicinity of the terminal apparatus at the transmitting end and occupation of radio resources in the vicinity of the terminal apparatus at the receiving end. In this case, the terminal apparatus at the receiving end sends, to the terminal apparatus at the transmitting end, coordination information indicating the sensing result of the terminal apparatus at the receiving end to the terminal apparatus at the transmitting end. However, in the conventional technology, an occasion for sending the coordination information by the terminal apparatus at the receiving end is not limited, and when receiving the coordination information, the terminal apparatus at the transmitting end may have missed an occasion for sending the sidelink information, reducing reliability of sidelink communication.

The following documents provide technical background in the art of resource selection in sidelink communication with the assistance of a receiving end:
WO 2020/134902 A1 (CHINA ACAD TELECOM TECHNOLOGY MII) 2 July 2020,;
WO 2016/181094 A1 (BLACKBERRY LTD [CA]; VUTUKURI ESWAR [GB]) 17 November 2016;
WO 2020/033088 A1 (CONVIDA WIRELESS LLC [US]) 13 February 2020.

### SUMMARY

Embodiments of this application provide a communication methods, apparatuses, and computer program to improve reliability of sidelink communication.

Coordination information is information for assisting a first terminal apparatus in determining a transmission resource for sidelink information, and time validity of coordination information is very important. In V2X communication, sidelink information usually needs to be transmitted in a very timely manner, to ensure that a vehicle can obtain information about a vehicle or a pedestrian nearby in a timely manner. If the first terminal apparatus already misses an occasion for sending sidelink information when coordination information is sent to the first terminal apparatus, the coordination information actually is no longer useful, reducing reliability of sidelink communication. Therefore, in embodiments of this application, a first time is determined, and time validity of the coordination information can be ensured by transmitting the coordination information at the first time and before the first time, thereby improving reliability of sidelink communication.

According to the present invention, a communication method is provided, including: determining a first time based on a first reference time and a first time offset; and sending, to a first terminal apparatus at the first time or before the first time, coordination information indicating a first resource. The first resource is for determining a second resource for receiving sidelink information from the first terminal apparatus. The first reference time includes a second time, a third time, a fourth time, or a fifth time. The second time includes a time at which trigger information is received from the first terminal apparatus, and the trigger information is for triggering determining of the first resource. The third time includes a start time of a resource selection window. The fourth time includes an end time of the resource selection window, and the resource selection window is for determining the second resource for receiving the sidelink information from the first terminal apparatus. The fifth time includes a start time of the first resource in time domain.

A second terminal apparatus sends the coordination information to the first terminal apparatus at the first time or before the first time, and the first time is determined based on the first reference time and the first time offset, that is, a time at which the second terminal apparatus sends the coordination information to the first terminal apparatus is limited. This ensures that the first terminal apparatus has sufficient time to determine, when the first terminal apparatus receives the coordination information, the second resource for sending the sidelink information, thereby improving reliability of sidelink communication.

In a possible design, the first time offset is determined based on a capability of the first terminal apparatus; or the first time offset is a predefined time offset. When the first time offset is determined based on the capability of the first terminal apparatus, the first time offset is more targeted, and the offset can be set more flexibly. When the second time offset is predefined, system complexity is reduced.

In a possible design, the method further includes: receiving the trigger information from the first terminal apparatus. The trigger information includes at least one of the following information: the start time of the resource selection window, the end time of the resource selection window, the first time offset, the capability of the first terminal apparatus, a second time offset, or duration of the resource selection window. The second time offset is a time offset between the time at which the trigger information is received from the first terminal apparatus and the start time of the resource selection window. The second time offset is for determining the start time of the resource selection window. The second time offset and the duration of the resource selection window are for determining the end time of the resource selection window.

In a possible design, the resource selection window is a resource selection window for the first terminal apparatus. In this way, the second terminal apparatus may select a resource in a more targeted manner for the resource selection window for determining the sidelink information transmission resource of the first terminal apparatus, thereby improving efficiency of the coordination information.

In a possible design, the method further includes: receiving control information, sidelink radio resource control PC5-RRC signaling, or a Media Access Control control element MAC CE from the first terminal apparatus, where the control information, the sidelink radio resource control PC5-RRC signaling, or the Media Access Control control element MAC CE indicates the first time offset and/or the capability of the first terminal apparatus.

In a possible design, the method further includes: receiving, on the second resource, the sidelink information from the first terminal apparatus.

In a possible design, the start time of the first resource in time domain falls within the resource selection window.

In a possible design, the first resource includes at least one resource for determining a resource for receiving the sidelink information from the first terminal apparatus, and the start time of the first resource in time domain includes a time domain start time of a resource ranking first in time domain among the at least one resource.

In a possible design, the first time and the first time offset are measured in milliseconds or slots.

According to the present invention, a communication method is provided, including: determining a first time based on a first reference time and a first time offset; and receiving, from a second terminal apparatus at the first time or before the first time, coordination information indicating a first resource. The first resource is for determining a second resource for sending sidelink information to the second terminal apparatus. The first reference time includes a second time, a third time, a fourth time, or a fifth time. The second time includes a time of sending trigger information to the second terminal apparatus, where the trigger information is for triggering determining of the first resource. The third time includes a start time of a resource selection window. The fourth time includes an end time of the resource selection window, and the resource selection window is for determining the second resource for sending the sidelink information to the second terminal apparatus. The fifth time includes a start time of the first resource in time domain.

A second terminal apparatus sends the coordination information to the first terminal apparatus at the first time or before the first time, and the first time is determined based on the first reference time and the first time offset, that is, a time at which the second terminal apparatus sends the coordination information to the first terminal apparatus is limited. This ensures that the first terminal apparatus has sufficient time to determine, when the first terminal apparatus receives the coordination information, the second resource for sending the sidelink information, thereby improving reliability of sidelink communication.

In a possible design, the first time offset is determined based on a capability of the first terminal apparatus; or the first time offset is a predefined time offset.

When the first time offset is determined based on the capability of the first terminal apparatus, the first time offset is more targeted, and the offset can be set more flexibly. When the second time offset is predefined, system complexity is reduced.

In a possible design, the method further includes: sending the trigger information to the second terminal apparatus, where the trigger information includes at least one of the following information: the start time of the resource selection window, the end time of the resource selection window, the first time offset, the capability of the first terminal apparatus, a second time offset, or duration of the resource selection window. The second time offset is a time offset between a time at which the trigger information is sent to the second terminal apparatus and the start time of the resource selection window. The second time offset is for determining the start time of the resource selection window. The second time offset and the duration of the resource selection window are for determining the end time of the resource selection window.

In a possible design, the resource selection window is a resource selection window for the first terminal apparatus.

In this way, the second terminal apparatus may select a resource in a more targeted manner for the resource selection window for determining the sidelink information transmission resource of the first terminal apparatus, thereby improving efficiency of the coordination information.

In a possible design, the method further includes: sending control information, sidelink radio resource control PC5-RRC signaling, or a Media Access Control control element MAC CE to the second terminal apparatus, where the control information, the sidelink radio resource control PC5-RRC signaling, or the Media Access Control control element MAC CE indicates the first time offset and/or the capability of the first terminal apparatus.

In a possible design, the method further includes: sending, on the second resource, the sidelink information to the second terminal apparatus.

In a possible design, the start time of the first resource in time domain falls within the resource selection window.

In a possible design, the first resource includes at least one resource for determining a resource for sending the sidelink information to the second terminal apparatus, and the start time of the first resource in time domain includes a time domain start time of a resource ranking first in time domain among the at least one resource.

In a possible design, the first time and the first time offset are measured in milliseconds or slots.

According to the present invention, a second terminal apparatus is provided, including: a processing module, configured to determine a first time based on a first reference time and a first time offset; and a transceiver module, configured to send, to a first terminal apparatus at the first time or before the first time, coordination information indicating a first resource. The first resource is for determining a second resource for receiving sidelink information from the first terminal apparatus. The first reference time includes a second time, a third time, a fourth time, or a fifth time. The second time includes a time at which trigger information is received from the first terminal apparatus, and the trigger information is for triggering determining of the first resource. The third time includes a start time of a resource selection window. The fourth time includes an end time of the resource selection window, and the resource selection window is for determining the second resource for receiving the sidelink information from the first terminal apparatus. The fifth time includes a start time of the first resource in time domain.

A second terminal apparatus sends the coordination information to the first terminal apparatus at the first time or before the first time, and the first time is determined based on the first reference time and the first time offset, that is, a time at which the second terminal apparatus sends the coordination information to the first terminal apparatus is limited. This ensures that the first terminal apparatus has sufficient time to determine, when the first terminal apparatus receives the coordination information, the second resource for sending the sidelink information, thereby improving reliability of sidelink communication.

In a possible design, the first time offset is determined based on a capability of the first terminal apparatus; or the first time offset is a predefined time offset.

When the first time offset is determined based on the capability of the first terminal apparatus, the first time offset is more targeted, and the offset can be set more flexibly. When the second time offset is predefined, system complexity is reduced.

In a possible design, the transceiver module is further configured to receive the trigger information from the first terminal apparatus, where the trigger information includes at least one of the following information: the start time of the resource selection window, the end time of the resource selection window, the first time offset, the capability of the first terminal apparatus, a second time offset, or duration of the resource selection window. The second time offset is a time offset between the time at which the trigger information is received from the first terminal apparatus and the start time of the resource selection window. The second time offset is for determining the start time of the resource selection window. The second time offset and the duration of the resource selection window are for determining the end time of the resource selection window.

In a possible design, the resource selection window is a resource selection window for the first terminal apparatus.

In this way, the second terminal apparatus may select a resource in a more targeted manner for the resource selection window for determining the sidelink information transmission resource of the first terminal apparatus, thereby improving efficiency of the coordination information.

In a possible design, the transceiver module is further configured to receive control information, sidelink radio resource control PC5-RRC signaling, or a Media Access Control control element MAC CE from the first terminal apparatus, where the control information, the sidelink radio resource control PC5-RRC signaling, or the Media Access Control control element MAC CE indicates the first time offset and/or the capability of the first terminal apparatus.

In a possible design, the transceiver module is further configured to receive, on the second resource, the sidelink information from the first terminal apparatus.

In a possible design, the start time of the first resource in time domain falls within the resource selection window.

In a possible design, the first resource includes at least one resource for determining a resource for receiving the sidelink information from the first terminal apparatus, and the start time of the first resource in time domain includes a time domain start time of a resource ranking first in time domain among the at least one resource.

In a possible design, the first time and the first time offset are measured in milliseconds or slots.

According to the present invention, a first terminal apparatus is provided, including: a processing module, configured to determine a first time based on a first reference time and a first time offset; and a transceiver module, configured to receive, from a second terminal apparatus at the first time or before the first time, coordination information indicating a first resource. The first resource is for determining a second resource for sending sidelink information to the second terminal apparatus. The first reference time includes a second time, a third time, a fourth time, or a fifth time. The second time includes a time of sending trigger information to the second terminal apparatus, where the trigger information is for triggering determining of the first resource. The third time includes a start time of a resource selection window. The fourth time includes an end time of the resource selection window, and the resource selection window is for determining the second resource for sending the sidelink information to the second terminal apparatus. The fifth time includes a start time of the first resource in time domain.

A second terminal apparatus sends the coordination information to the first terminal apparatus at the first time or before the first time, and the first time is determined based on the first reference time and the first time offset, that is, a time at which the second terminal apparatus sends the coordination information to the first terminal apparatus is limited. This ensures that the first terminal apparatus has sufficient time to determine, when the first terminal apparatus receives the coordination information, the second resource for sending the sidelink information, thereby improving reliability of sidelink communication.

In a possible design, the first time offset is determined based on a capability of the first terminal apparatus; or the first time offset is a predefined time offset.

When the first time offset is determined based on the capability of the first terminal apparatus, the first time offset is more targeted, and the offset can be set more flexibly. When the second time offset is predefined, system complexity is reduced.

In a possible design, the transceiver module is further configured to send the trigger information to the second terminal apparatus, where the trigger information includes at least one of the following information: the start time of the resource selection window, the end time of the resource selection window, the first time offset, the capability of the first terminal apparatus, a second time offset, or duration of the resource selection window. The second time offset is a time offset between a time at which the trigger information is sent to the second terminal apparatus and the start time of the resource selection window. The second time offset is for determining the start time of the resource selection window. The second time offset and the duration of the resource selection window are for determining the end time of the resource selection window.

In a possible design, the resource selection window is a resource selection window for the first terminal apparatus.

In this way, the second terminal apparatus may select a resource in a more targeted manner for the resource selection window for determining the sidelink information transmission resource of the first terminal apparatus, thereby improving efficiency of the coordination information.

In a possible design, the transceiver module is further configured to send control information, sidelink radio resource control PC5-RRC signaling, or a Media Access Control control element MAC CE to the second terminal apparatus, where the control information, the sidelink radio resource control PC5-RRC signaling, or the Media Access Control control element MAC CE indicates the first time offset and/or the capability of the first terminal apparatus.

In a possible design, the transceiver module is further configured to send, on the second resource, the sidelink information to the second terminal apparatus.

In a possible design, the start time of the first resource in time domain falls within the resource selection window.

In a possible design, the first resource includes at least one resource for determining a resource for sending the sidelink information to the second terminal apparatus, and the start time of the first resource in time domain includes a time domain start time of a resource ranking first in time domain among the at least one resource.

In a possible design, the first time and the first time offset are measured in milliseconds or slots.

According to a fifth aspect, a terminal apparatus is provided, including a processor. The processor is coupled to at least one memory, and the processor is configured to read a computer program stored in the at least one memory, to perform the method according to any implementation of the first aspect, or perform the method according to any implementation of the second aspect.

According to a sixth aspect, a communication apparatus is provided. The communication apparatus includes a processor and a communication interface, and the communication interface can be configured to communicate with other apparatuses. Optionally, the communication apparatus may further include a memory, configured to store computer instructions. The processor and the memory are coupled to each other to perform the method according to the first aspect, or the second aspect, or various possible implementations. Alternatively, the first communication apparatus may not include the memory, and the memory may be disposed outside the communication apparatus. The processor, the memory, and the communication interface are coupled to each other to perform the method according to various possible implementations of the first aspect or the second aspect. For example, when the processor executes the computer instructions stored in the memory, the communication apparatus is enabled to perform the method according to any possible implementation of the first aspect or the second aspect. For example, the first communication apparatus is a communication apparatus, or a chip or other component arranged in the communication apparatus.

According to a seventh aspect, a computer-readable storage medium is provided. The computer-readable storage medium is configured to store a computer program, and when the computer program is run on a computer, the computer is enabled to perform the method according to any implementation of the first aspect, or the computer is enabled to perform the method according to any implementation of the second aspect.

According to an eighth aspect, a chip or a system on chip is provided, including a processor and a communication interface. The processor is configured to read instructions to perform the method according to any implementation of the first aspect, or perform the method according to any implementation of the second aspect.

The chip or the system on chip may further include a memory. For example, the processor may read and execute a software program stored in the memory, to perform the method according to any possible design of the first aspect or the second aspect. Alternatively, the memory may not be included in the chip but is located outside the chip. This is equivalent to that the processor may read and execute the software program stored in the external memory, to perform the method according to any possible design of the first aspect or the second aspect.

According to the present invention, a computer program product including instructions is provided. The computer program product is configured to store a computer program. When the computer program is run on a computer, the computer is enabled to perform the method according to any possible design of the first aspect or the second aspect.

According to a tenth aspect, a communication system is provided, including the terminal apparatus according to any implementation of the third aspect and the terminal apparatus according to any implementation of the fourth aspect.

### BRIEF DESCRIPTION OF DRAWINGS

FIG. 1 is a schematic diagram of several application scenarios of V2X;
FIG. 2 is a schematic diagram of a network architecture according to an embodiment of this application;
FIG. 3 is a schematic diagram of a sidelink information transmission resource allocation manner in Mode-2;
FIG. 4 is a schematic diagram of a V2X communication scenario according to an embodiment of this application;
FIG. 5 is a schematic diagram of a V2X communication scenario according to an embodiment of this application;
FIG. 6 is a flowchart of a communication method according to an embodiment of this application;
FIG. 7 is a schematic block diagram of a first terminal apparatus according to an embodiment of this application;
FIG. 8 is a schematic block diagram of a second terminal apparatus according to an embodiment of this application;
FIG. 9 is a schematic diagram of a first reference time according to an embodiment of this application;
FIG. 10 is a schematic diagram of a specific example of a communication method according to an embodiment of this application; and
FIG. 11 is a simplified schematic diagram of a structure of a terminal apparatus according to an embodiment of this application.

### DESCRIPTION OF EMBODIMENTS

With the development of wireless communication technologies, people's requirements for high data rates and good user experience are increasing. Communication technologies are not only applicable to people's daily life communication, but also have been applied to various fields. Internet of Everything has become a trend, especially in the Internet of Vehicles field. Vehicle-related communication is highly demanded in the automobile field. Therefore, a V2X communication technology is proposed in the 3rd Generation Partnership Project (the 3rd generation partnership project, 3GPP).

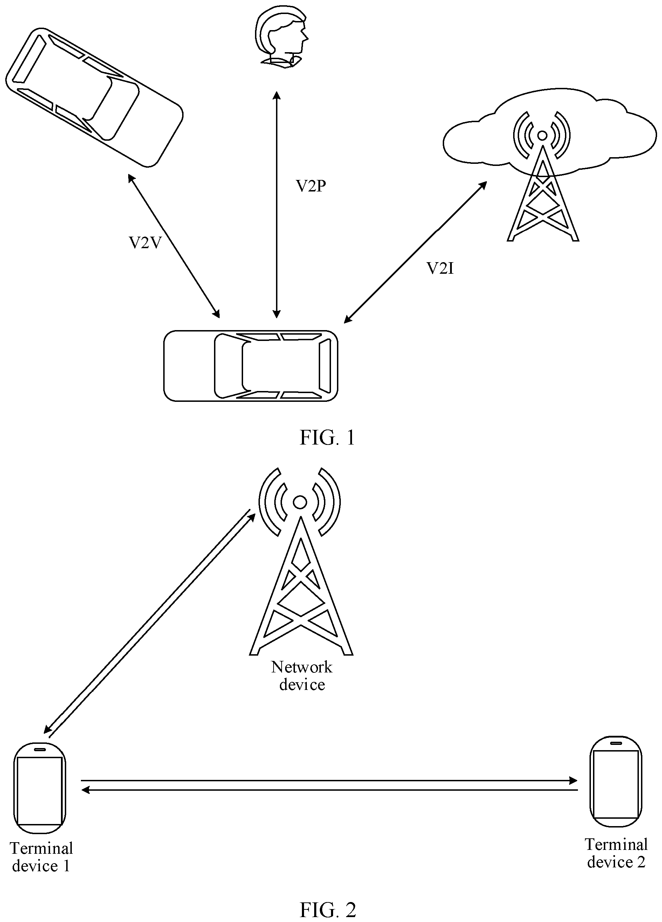

The V2X technology is a technology for communication between vehicles and the outside world, and is a basis and key technology for intelligent vehicles, autonomous driving, and intelligent transportation systems. V2X specifically includes several application requirements, such as direct communication of vehicle-to-vehicle (vehicle-to-vehicle, V2V), vehicle-to-infrastructure (vehicle-to-infrastructure, V2I), and/or vehicle-to-pedestrian (vehicle-to-pedestrian, V2P), and communication interaction of vehicle-to-network (vehicle-to-network, V2N). As shown in FIG. 1, V2V refers to communication between vehicles; V2P refers to communication between a vehicles and a person (including a pedestrian, a cyclist, a driver, or a passenger); and V2I refers to communication between a vehicle and an infrastructure such as an RSU. V2N may be included in V2I. V2N refers to communication between vehicles and a base station/network.

V2P may be used for safety warning for a pedestrian or a non-motor vehicle on a road. A vehicle may communicate with a road or even another infrastructure such as a traffic light or a road barrier through V2I, to obtain road management information such as traffic light signal timing. V2V may be used for information exchange and warning between vehicles, and a most typical application of V2V is an anti-collision safety system between vehicles. V2N is a most widely used form of internet of vehicles currently, and a main function of V2N is to enable a vehicle to connect to a cloud server through a mobile network, to use application functions, such as navigation, entertainment, or anti-theft, provided by the cloud server.

In embodiments of this application, V2X communication is used as an example for description. However, embodiments of this application may also be applicable to device-to-device (Device to Device, D2D) communication, machine type communication (Machine Type Communication, MTC), Internet of Things (Internet of Things, IoT) communication, and the like. FIG. 2 shows a network architecture used in an embodiment of this application.

The network architecture shown in FIG. 2 includes a network apparatus and two terminal apparatuses, namely, a terminal apparatus 1 and a terminal apparatus 2. The two terminal apparatuses may both be within coverage of the network apparatus; or among the two terminal apparatuses, only the terminal apparatus 1 is within coverage of the network apparatus, and the terminal apparatus 2 is not within coverage of the network apparatus; or none of the two terminal apparatuses is within coverage of the network apparatus. The two terminal apparatuses may communicate with each other through a sidelink. FIG. 2 shows an example in which the terminal apparatus 1 is within coverage of the network apparatus and the terminal apparatus 2 is not within coverage of the network apparatus. Certainly, a quantity of terminal apparatuses in FIG. 2 is merely an example. In practical applications, the network apparatus may serve a plurality of terminal apparatuses.

The network apparatus in FIG. 2 is, for example, an access network apparatus, such as a base station. The access network apparatus corresponds to different apparatuses in different systems. For example, the access network apparatus corresponds to a 5G access network apparatus in a 5G system, such as a gNB, or is an access network apparatus in a future-generation communication system. The terminal apparatus in FIG. 2 is for example, an on-board terminal apparatus or a vehicle, but the terminal apparatus in embodiments of this application is not limited thereto.

The following describes some terms in embodiments of this application, to facilitate understanding of a person skilled in the art.
(1) Terminal apparatus: A terminal apparatus includes a terminal device, or may include a unit, a module, a chip, or a chip system built in the terminal device. The terminal device may be, for example, a user equipment, a terminal device, a mobile phone, or a vehicle. The unit, the module, the chip, or the chip system may be disposed in the terminal device. The terminal apparatus may communicate with a core network through a radio access network (radio access network, RAN), and exchange voice and/or data with the RAN. For example, the terminal apparatus may include a user equipment (user equipment, UE), a wireless terminal apparatus, a mobile terminal apparatus, a device-to-device (device-to-device, D2D) communication terminal apparatus, a vehicle-to-everything (vehicle to everything, V2X) terminal apparatus, a machine-to-machine/machine type communication (machine-to-machine/machine type communication, M2M/MTC) terminal apparatus, an Internet of Things (internet of things, IoT) terminal apparatus, and the like.

In embodiments of this application, the terminal apparatus may also be a wearable apparatus. The wearable apparatus may also be referred to as a wearable intelligent apparatus or an intelligent wearable apparatus, and is a collective term for wearable apparatuses developed by intelligently designing everyday wearables based on a wearable technology, for example, glasses, gloves, watches, bands, helmets, jewelry, clothing, and shoes. The wearable apparatus is a portable apparatus that is worn on a human body or integrated into a user's clothing or accessory. The wearable apparatus is not merely a hardware apparatus, but can implement powerful functions through software support, data interaction, and cloud interaction.

The terminal apparatuses described above, when located on a vehicle (for example, placed in the vehicle or installed in the vehicle), may be considered as an on-board terminal apparatus. The on-board terminal apparatus is also referred to as, for example, an on-board unit (on-board unit, OBU).

(2) Network apparatus: A network apparatus includes a radio access network (radio access network, RAN) apparatus, for example, a base station or an access point, and may be an apparatus that communicates with a terminal apparatus over an air interface in a radio access network through one or more cells. For another example, a network apparatus in the vehicle-to-everything (vehicle-to-everything, V2X) technology is a road side unit (road side unit, RSU). The RSU may be a stationary infrastructure entity supporting V2X applications, and may exchange a message with another entity supporting V2X applications. The network apparatus may include a next generation node B (next generation node B, gNB) in a 5th generation (5th generation, 5G) mobile communication new radio (new radio, NR) system (also referred to as an NR system for short), or may include a central unit (central unit, CU) and a distributed unit (distributed unit, DU) in a cloud radio access network (cloud radio access network, Cloud RAN) system.

The network apparatus may also include a core network apparatus. The core network apparatus may include, for example, an access and mobility management function (access and mobility management function, AMF), a user plane function (user plane function, UPF), or the like.

In embodiments of this application, an apparatus configured to perform a function of the network apparatus may also be an apparatus that supports the network apparatus in performing the function, for example, a unit, a module, a chip, or a chip system. The unit, the module, the chip, or the chip system may be installed in the network apparatus.

The foregoing describes some terms used in embodiments of this application. The following describes the V2X communication technology used in embodiments of this application.

In a V2X communication process, there are two resource allocation modes for a resource used by a terminal apparatus at a transmitting end to transmit sidelink information: Mode-1 and Mode-2.

A sidelink information transmission resource allocation manner in Mode-1 is as follows.

Mode-1 is mainly applied to V2X communication with network coverage, and a network apparatus allocates a sidelink information transmission resource. Specifically, Mode-1 may further include a dynamic grant (dynamic grant, DG) mode and a configured grant (configured grant, CG) mode. In the DG mode of Mode-1, a base station schedules, based on downlink control information (downlink control information, DCI), a transmission resource to be used by a terminal apparatus at a transmitting end to send sidelink information to a terminal apparatus at a receiving end. In the CG mode of Mode-1, the base station configures related transmission resource of the sidelink information by using high-level signaling, such as radio resource control (RRC) signaling.

A sidelink information transmission resource allocation manner in Mode-2 is as follows.

In Mode-2, determining of a sidelink information transmission resource by a terminal apparatus at a transmitting end does not rely on a base station. This mode is not limited to network coverage. When there is no network coverage, the terminal apparatus at the transmitting end can also use this mode for communication.

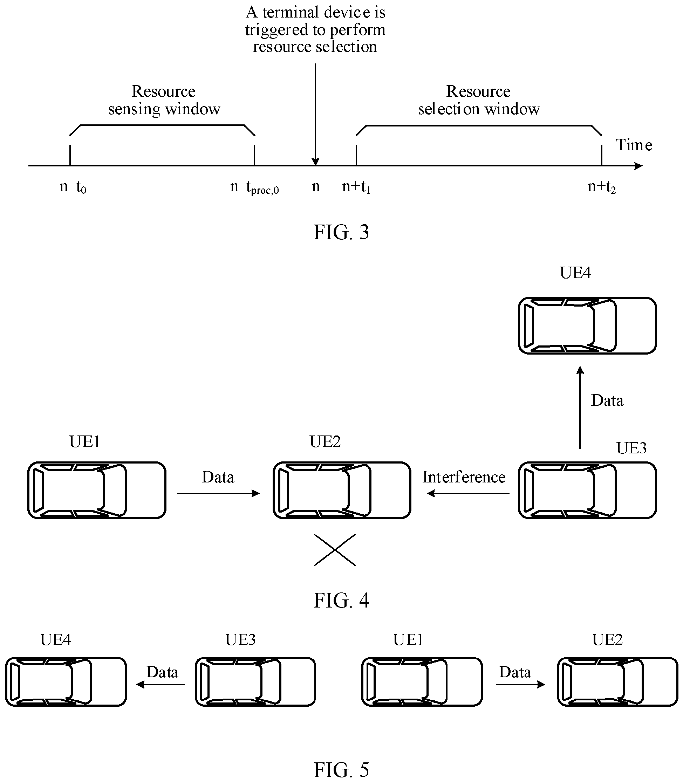

As shown in FIG. 3, first, in Mode-2, the terminal apparatus at the transmitting end continuously monitors a radio resource. When the terminal apparatus at the transmitting end learns, in a slot n, that there is sidelink information to be sent, the terminal apparatus at the transmitting end obtains a sensing result in a resource sensing window [*n* - *t*₀*,n* - *t*_{*proc,*0}), that is, obtains a sensing result obtained by the terminal apparatus at the transmitting end before the slot n by monitoring the radio resource in the sensing window. The sensing result may reflect a resource occupation status, and may be determined based on a measured signal strength, or may be determined by decoding detected sidelink control information sent by another terminal apparatus to obtain a sidelink information transmission status of the another terminal apparatus. *t*₀ is a boundary value of the resource sensing window, for example, *t*₀ may be 1100 ms or 100 ms, or may be another value. *t*_{*proc*,0} is a time for the terminal apparatus at the transmitting end to process the sensing result, and a value of *t*_{*proc*,0} varies with a capability of the terminal apparatus. *t*_{*proc*,0} ≥ 0.

In addition, the terminal apparatus at the transmitting end filters out unavailable time-frequency resources in a resource selection window [*n* + *t*₁*,n* + *t*₂] based on the sensing result, that is, time-frequency resources that have been occupied by other terminal apparatuses for information transmission, so that the terminal apparatus at the transmitting end determines a resource that can be used for sidelink information transmission. 0 *≤ t*₁ *≤ t*_{*proc,*1}, *t*_{*proc*,1} is a time at which the terminal apparatus processes the sensing result, and a value of network architecture is subject to the capability of the terminal apparatus. *t_{2_min}* < *t*₂ ≤ remaining packet delay budget (packet delay budget, PDB). A PDB indicates a maximum delay from a moment at which a data packet is generated at a service layer to a moment at which the data packet is successfully sent. For example, a remaining PDB at a moment n is a remaining delay after the moment n starting from the moment at which the data packet is generated at the service layer. The PDB may be measured in slots, subframes, or frames, or may be measured by using an absolute time, for example, milliseconds or seconds.

A specific resource selection manner of the terminal apparatus at the transmitting end is described as follows.
1. The terminal apparatus at the transmitting end receives SCI from another terminal apparatus in a resource pool in the resource sensing window [*n* - *t*₀*,n* - *t*_{*proc,*0})*.* The another terminal apparatus may include at least one terminal apparatus in the vicinity of the terminal apparatus at the transmitting end, for example, include the terminal apparatus 1. Further, the SCI is 1st-stage SCI (1st-stage SCI), and is sent on a physical sidelink control channel (physical sidelink control channel, PSCCH). The SCI includes time-frequency resource information for transmitting the sidelink information by the another terminal apparatus, periodicity information for transmitting the sidelink information, and/or priority information of the sidelink information. It may be understood that the terminal apparatus at the transmitting end may learn, by detecting the SCI of the another terminal apparatus in the sensing window, resources occupied by the another terminal apparatus for transmitting the sidelink information of the another terminal apparatus. A resource pool, that is, a sidelink communication resource pool, is a time-frequency resource set used to transmit sidelink control information and/or data information. The resource pool includes several consecutive or inconsecutive subchannels in frequency domain, and includes several consecutive or inconsecutive slots in time domain. The subchannel includes several consecutive physical resource blocks PRBs (physical resource blocks) in frequency domain.
2. If the terminal apparatus at the transmitting end learns, based on SCI received from the terminal apparatus 1, that a transmission resource for to-be-sent sidelink information of the terminal apparatus 1 falls within the resource selection window [*n* + *t*₁*,n* + *t*₂] of the terminal apparatus at the transmitting end, the terminal apparatus at the transmitting end determines, based on the SCI, which resources in the resource selection window have been reserved by the terminal apparatus 1, and filters out the resources in a subsequent resource selection process.
3. After filtering out the time-frequency resources in the resource selection window that have been occupied by the another terminal apparatus or the unavailable resources, the terminal apparatus at the transmitting end may determine remaining resources in the resource selection window as available time-frequency resources. Therefore, the terminal apparatus at the transmitting end selects a time-frequency resource from the available time-frequency resources for transmitting the sidelink information.

In an existing mechanism, the time-frequency resource used by the terminal apparatus at the transmitting end to send data is determined based on the sensing result of the terminal apparatus at the transmitting end in the resource sensing window [*n* - *t*₀*,n* - *t*_{*proc,*0}). However, the terminal apparatus at the transmitting end does not know a channel status or a resource occupation status in the vicinity of the terminal apparatus at the receiving end. If another terminal apparatus is communicating in the vicinity of the terminal apparatus at the receiving end but is not sensed by the terminal apparatus at the transmitting end, the terminal apparatus at the receiving end may suffer strong interference from sidelink communication of the another terminal apparatus when receiving data from the terminal apparatus at the transmitting end, resulting in poor signal reception quality or even reception failure of the terminal apparatus at the receiving end.

For example, reference may be made to FIG. 4. UE1 selects a time-frequency resource based on a sensing result of the UE1, to send data to UE2. Because UE3 and UE4 are distant from the UE1, the UE1 determines during sensing that no other terminal apparatus performs sidelink communication in the vicinity of UE1, and then the UE1 sends data to the UE2. However, actually, the UE3 is sending data to the UE4. Because the UE3 and the UE2 are relatively close to each other, when a resource used by the UE1 to send data to the UE2 overlaps or is the same as a resource used by the UE3 to send data to the UE4, the sending of the data by the UE3 to the UE4 causes strong interference to receiving of the data by the UE2 from the UE1. As a result, the UE2 cannot correctly receive the data from the UE1, and reliability of sidelink communication is reduced.

For another example, reference may be made to FIG. 5. The UE1 performs sensing, and can sense that the UE3 sends data to the UE4. In this case, the UE1 considers that data cannot be sent to the UE2 through a time-frequency resource used by the UE3 to send the data to the UE4. In other words, the UE1 determines that the time-frequency resource used by the UE3 to send the data to the UE4 is an unavailable time-frequency resource. However, actually, because the UE1 is distant from the UE4, the UE4 has little interference on the UE1, and the sending of the data by the UE3 to the UE4 does not affect receiving of data by the UE2 from the UE1. For the UE1, this is a case in which resources are excessively filtered out, and some resources that can be used are determined as unavailable time-frequency resources. As a result, time-frequency resources available to the UE1 are reduced.

In view of this, the sidelink information transmission resource allocation manner in Mode-2b is provided as an improvement over the sidelink information transmission resource allocation manner in Mode-2. In Mode-2b, when determining the sidelink information transmission resource, the terminal apparatus at the transmitting end needs to consider both a resource sensing result of the terminal apparatus at the transmitting end and a resource sensing result of the terminal apparatus at the receiving end. In Mode-2b, the terminal apparatus at the receiving end performs sensing detection on the terminal apparatus in the vicinity of the terminal apparatus at the receiving end, that is, detects SCI sent by a terminal apparatus in the vicinity of the terminal apparatus at the receiving end. According to the SCI, the terminal apparatus at the receiving end determines sidelink information transmission resources available or unavailable for the terminal apparatus at the receiving end, and sends coordination information to the terminal apparatus at the transmitting end to notify the terminal apparatus at the receiving end of the available or unavailable sidelink information transmission resources. Then, the terminal apparatus at the receiving end determines, based on the available or unavailable sidelink information determined by the terminal apparatus at the receiving end itself and the available or unavailable sidelink information determined by the terminal apparatus at the receiving end, a resource finally used to send sidelink information to the terminal apparatus at the receiving end.

The following describes embodiments of this application in more detail with reference to specific examples by using a first terminal apparatus and a second terminal apparatus as an example.

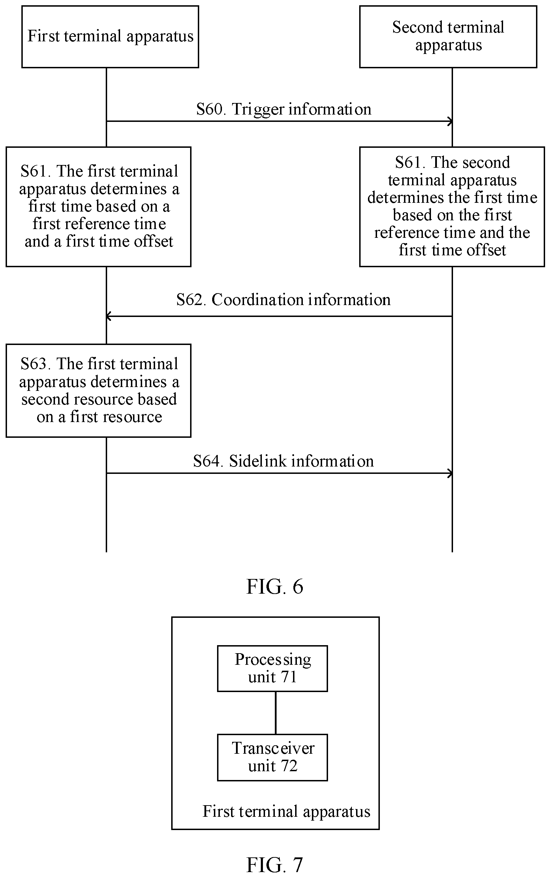

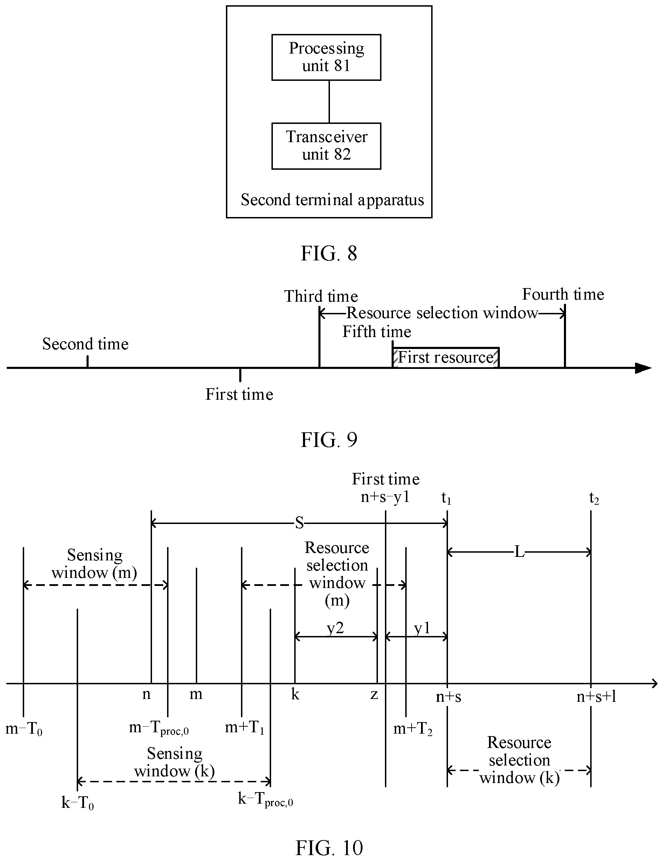

FIG. 6 shows a communication method according to an embodiment of this application. Specifically, the communication method may be a coordination information transmission method, and a first terminal apparatus, a second terminal apparatus, and a system are further provided. The following first describes the apparatuses involved in the embodiment of FIG. 6. As shown in FIG. 7, the first terminal apparatus in FIG. 6 includes a processing unit 71 and a transceiver unit 72. The transceiver unit 72 may be replaced by a sending unit for sending a signal, and the transceiver unit 72 may be replaced by a receiving unit for receiving a signal. As shown in FIG. 8, the second terminal apparatus in FIG. 6 includes a processing unit 81 and a transceiver unit 82. The transceiver unit 82 may be replaced by a sending unit for sending a signal, and the transceiver unit 82 may be replaced by a receiving unit for receiving a signal.

When the first terminal apparatus and the second terminal apparatus are on-board modules or user equipments, the processing unit 71 and the processing unit 81 may be processors, and the transceiver unit 72 or the transceiver unit 82 may be a transceiver. When the transceiver unit 72 or the transceiver unit 82 is replaced with a sending unit, the sending unit may be a transmitter. When the transceiver unit 72 or the transceiver unit 82 is replaced with a receiving unit, the receiving unit may be a receiver. The transceiver, the transmitter, or the receiver may be a radio frequency circuit. The first terminal apparatus or the second terminal apparatus may further include a storage unit or a computer-readable storage medium. Certainly, the storage unit or the computer-readable storage medium may also be disposed outside the first terminal apparatus or the second terminal apparatus. For example, the storage unit or the computer-readable storage medium is disposed outside an on-board module, and is in communication connection with the first terminal apparatus or the second terminal apparatus. The storage unit or the computer-readable storage medium is configured to store computer instructions. The processor is in communication connection with a memory, and the processor executes the computer instructions stored in the memory or the computer-readable storage medium, to enable the first terminal apparatus and the second terminal apparatus to perform the method in the embodiment of FIG. 6. The processor may be a general-purpose central processing unit (CPU), a microprocessor, or an application-specific integrated circuit (Application-Specific Integrated Circuit, ASIC).

When the first terminal apparatus and the second terminal apparatus are chips or systems on chip, the processing unit 71 or the processing unit 81 may be, for example, a processor, and the transceiver unit 72 or the transceiver unit 82 may be an output interface, pin, or circuit, or the like. Alternatively, the transceiver unit 72 or the transceiver unit 82 may be an input interface, pin, or circuit, or the like. Alternatively, the transceiver unit 72 or the transceiver unit 82 may be an input/output interface, pin, or circuit, or the like. The processing unit 71 or the processing unit 81 may execute computer instructions, to enable the first terminal apparatus or the second terminal apparatus to perform the method in FIG. 6. Optionally, the computer instructions are stored in a storage unit or a computer-readable storage medium. The storage unit or the computer-readable storage medium may be a storage unit in the chip, for example, a register or a cache. Alternatively, the storage unit or the computer-readable storage medium may be a storage unit located outside the chip in a terminal device, user equipment, or a vehicle, for example, a read-only memory (Read-Only Memory, ROM), another type of static storage device that can store static information and instructions, or a random access memory (Random Access Memory, RAM).

The communication method in the embodiment of FIG. 6, and in particular, a coordination information transmission method, includes the following steps.

Step S60: The transceiver unit 72 of the first terminal apparatus sends trigger information to the second terminal apparatus, and the transceiver unit 82 of the second terminal apparatus receives the trigger information from the first terminal apparatus. The trigger information is control information, and is for triggering the second terminal apparatus to determine a first resource. The first resource is used by the first terminal apparatus to determine a resource for sending sidelink information to the second terminal apparatus.

Certainly, step S60 is not a necessary step. Manners of determining a sidelink information transmission resource in Mode-2b include a trigger manner and a non-trigger manner. In the trigger manner, the first terminal apparatus sends the trigger information to the second terminal apparatus, to trigger the second terminal apparatus to send coordination information to the first terminal apparatus. After receiving the trigger information, the second terminal apparatus performs resource selection based on a sensing result. To be specific, the second terminal apparatus performs resource selection in a resource selection window based on the sensing result in a sensing window and reservation information, to determine the first resource. The resource selection window may be a resource selection window for the first terminal apparatus indicated by the first terminal apparatus to the second terminal apparatus, to notify the second terminal apparatus that the first terminal apparatus will perform resource selection in the resource selection window to determine a resource for sidelink information transmission. Therefore, the second terminal apparatus may select, in the resource selection window based on the sensing result of the second terminal apparatus in the sensing window and the reservation information, the first resource for assisting the first terminal apparatus in determining the resource to be used by the first terminal apparatus to send the sidelink information. The reservation information is carried in sidelink control information of another terminal apparatus received by the second terminal apparatus, and indicates periodicity information based on which the another terminal apparatus periodically transmits sidelink information. The second terminal apparatus carries a resource selection result of the second terminal apparatus, that is, the first resource, in the coordination information. Then, the first terminal apparatus determines, based on a resource selection result of the first terminal apparatus and the resource selection result of the second terminal apparatus that is carried in the coordination information, the resource to be used by the first terminal apparatus to send the sidelink information to the second terminal apparatus.

In the non-trigger manner, the first terminal apparatus does not send the trigger information to the second terminal apparatus. In this case, the second terminal apparatus periodically or aperiodically performs resource sensing, performs resource selection in a resource selection window based on the sensing result and the reservation information, and then notifies the first terminal apparatus of a resource selection result through coordination information. The resource selection window may be a resource selection window for the second terminal apparatus, or may be a predefined resource selection window. In the non-trigger manner, step S60 is not necessary.

Step S61: The processing unit 71 of the first terminal apparatus determines a first time based on a first reference time and a first time offset, and the processing unit 81 of the second terminal apparatus also determines the first time based on the first reference time and the first time offset. Although both the first terminal apparatus and the second terminal apparatus determine the first time in step 61, there is no limitation on a time sequence between the determining of the first time by the first terminal apparatus and the determining of the first time by the second terminal apparatus. The first time is subsequently for determining a sending time at which the second terminal apparatus sends the coordination information to the first terminal apparatus.

The first reference time is a time reference point, that is, a time boundary for the sending of the coordination information, that is, the first time, may be determined based on the time reference point and the first time offset. The time boundary may also be referred to as a delay boundary. The first reference time and the first time offset may be measured in seconds or milliseconds, or certainly may be slots or symbols. In the conventional technology, a time at which the second terminal apparatus sends the coordination information to the first terminal apparatus is not specified. As a result, when receiving the coordination information, the first terminal apparatus may already miss an occasion for sending the sidelink information, and reliability is reduced. With the first time as a limitation, the second terminal apparatus needs to send the coordination information to the first terminal apparatus at the first time or before the first time, thereby improving the reliability.

In step 61, the first time needs to be determined based on two factors: the first reference time and the first time offset.

As shown in FIG. 9, the first reference time may include four types of reference times: a second time, a third time, a fourth time, and a fifth time.

The second time includes a time at which the trigger information is received from the first terminal apparatus, and the trigger information is for triggering determining of the first resource. That is, the second time is a time at which the first terminal apparatus sends the trigger information to the second terminal apparatus in step S60, and is also a time at which the second terminal apparatus receives the trigger information from the first terminal apparatus. In this case, the first terminal apparatus or the second terminal apparatus determines the first time based on the first time offset and the second time, that is, the time at which the trigger information is sent or received. It can be learned from FIG. 9 that, in this case, the first time offset is a time difference between the second time and the first time, that is, the first time at which the second terminal apparatus sends the coordination information is obtained by offsetting the transmission time of the trigger information as a reference time point by the first time offset. Therefore, after receiving the trigger information, the second terminal apparatus learns the second time, and determines, based on the first time offset, a latest time for feeding back the coordination information, that is, the delay boundary. In this case, the delay boundary for feeding back the coordination information is an offset relative to triggering of the coordination information. The processing process is simple, and system complexity is reduced.

The third time includes a start time of the resource selection window, and the resource selection window is for determining the second resource for receiving the sidelink information from the first terminal apparatus, that is, the resource selection window is used for determining the second resource for sending the sidelink information to the second terminal apparatus by the first terminal apparatus. The resource selection window is a resource selection window for the first terminal apparatus. To be specific, the first terminal apparatus determines, in the resource selection window, a resource for transmitting the sidelink information. The resource selection window is indicated by the first terminal apparatus to the second terminal apparatus, so that the second terminal apparatus determines the first resource in the resource selection window. The first resource is indicated to the first terminal apparatus through the coordination information sent by the second terminal apparatus to the first terminal apparatus. It can be learned from FIG. 9 that, in this case, the first time offset is a time difference between the third time and the first time, that is, the first time is obtained by offsetting the start time of the resource selection window as a reference time point by the first time offset. Therefore, the first terminal apparatus and the second terminal apparatus associate the start time of the resource selection window with the expected first time offset and determine the first time. The first time finally determined by using the third time as the first reference time is generally closer to the third time in time domain. This can reduce a quantity of bits for transmitting the first time offset, and is applicable to definition of the delay boundary for sending of the coordination information in the trigger scenario and the non-trigger scenario. As long as the resource selection window exists, the third time can be used as the time reference point, providing higher practicability.

The fourth time includes an end time of the resource selection window. The resource selection window is consistent with the resource selection window described in the example in which the third time is used as the first reference time. Details are not described herein again. It can be learned from FIG. 9 that, in this case, the first time offset is a time difference between the fourth time and the first time, that is, the first time at which the second terminal apparatus sends the coordination information is obtained by offsetting the end time of the resource selection window as a reference time point by the first time offset. Therefore, the first terminal apparatus and the second terminal apparatus associate the end time of the resource selection window with the expected first time offset. This can ensure that the first time offset is always a positive number, reduces implementation complexity, and is applicable to definition of the delay boundary for sending of the coordination information in a trigger scenario and a non-trigger scenario. As long as the resource selection window exists, the fourth time can be used as the time reference point.

The resource selection window may be a resource selection window for the first terminal apparatus, that is, a period of time used to select a sidelink information transmission resource and determined by the first terminal apparatus based on a delay requirement of to-be-transmitted sidelink data. The first terminal apparatus determines, in the resource selection window, the transmission resource for transmitting the to-be-transmitted sidelink information.

The case in which the first reference time is the second time may correspond to the trigger manner of determining a sidelink information transmission resource in Mode-2b, and the case in which the first reference time is the third time or the fourth time may correspond to the trigger or non-trigger manner of determining a sidelink information transmission resource in Mode-2b. In the trigger manner of determining a sidelink information transmission resource, in step S60, the trigger information includes some information, and the information includes at least one of the following information: the start time of the resource selection window, the end time of the resource selection window, the first time offset, a capability of the first terminal apparatus or the second terminal apparatus, a second time offset, or duration of the resource selection window. The second time offset is a time offset between the time at which the trigger information is received from the first terminal apparatus and the start time of the resource selection window. The second time offset is for determining the start time of the resource selection window, and the second time offset and the duration of the resource selection window are for determining the end time of the resource selection window. When the trigger information includes the second time offset and the duration of the resource selection window, the start time of the resource selection window may be determined based on the time at which the second terminal apparatus receives the trigger information from the first terminal apparatus and the second time offset. The end time of the resource selection window may be determined based on the time at which the second terminal apparatus receives the trigger information from the first terminal apparatus, the second time offset, and the duration of the resource selection window. Optionally, some information described above may be indicated by a network apparatus to the first terminal apparatus and/or the second terminal apparatus through control information.

Optionally, the transceiver unit 72 of the first terminal apparatus may further send control information, sidelink PC5-radio resource control (PC5-Radio Resource Control, PC5-RRC) signaling, or a Media Access Control control element (Media Access Control Control Element, MAC CE) to the second terminal apparatus, and the transceiver unit 82 of the second terminal apparatus receives the control information, the PC5-RRC signaling, or the MAC CE from the first terminal apparatus. The control information, the PC5-RRC signaling, or the MAC CE indicate at least one of the following information: the start time of the resource selection window, the end time of the resource selection window, the first time offset, the capability of the first terminal apparatus or the second terminal apparatus, the second time offset, or the duration of the resource selection window.

The fifth time includes a start time of the first resource in time domain. The case in which the first reference time is the fifth time may correspond to the trigger or non-trigger manner of determining a sidelink information transmission resource in Mode-2b.

Corresponding to the trigger case, after the second terminal apparatus receives the trigger information in step S60, the second terminal apparatus senses a channel environment in the vicinity of the second terminal apparatus. For example, the second terminal apparatus may receive sidelink control information sent by a terminal apparatus in the vicinity of the second terminal apparatus, to learn resources on which the terminal apparatus in the vicinity of the second terminal apparatus transmits sidelink information, or the second terminal apparatus may measure a signal strength of a radio resource. Therefore, the second terminal apparatus may determine which resources in the vicinity of the second terminal apparatus are available or unavailable, and notify the first terminal apparatus of the available resources or the unavailable resources through the coordination information. The available resources or the unavailable resources obtained by the second terminal apparatus are the first resource. Corresponding to the non-trigger case, the second terminal apparatus also senses the channel environment in the vicinity of the second terminal apparatus periodically or aperiodically when not receiving the trigger information of the first terminal apparatus. For example, the second terminal apparatus may receive sidelink control information sent by a terminal apparatus in the vicinity of the second terminal apparatus, to learn resources on which the terminal apparatus in the vicinity of the second terminal apparatus transmits sidelink information, or the second terminal apparatus may measure a signal strength of a radio resource. Therefore, the second terminal apparatus may determine which resources in the vicinity of the second terminal apparatus are available or unavailable, and notify the first terminal apparatus of the available resources or the unavailable resources through the coordination information. The available resources or the unavailable resources obtained by the second terminal apparatus are the first resource. Optionally, the first resource is located in the resource selection window.

The first terminal apparatus may further indicate, to the second terminal apparatus through trigger information or other sidelink control information, which of the second time to the fifth time is the first reference time. In other words, when the first reference time is selected from a plurality of possible times, the first terminal apparatus may notify, via the trigger information or other sidelink control information, the second terminal apparatus of a specific reference time to be used as the first reference time.

The first resource includes at least one resource for determining a resource for receiving the sidelink information from the first terminal apparatus, and the start time of the first resource in time domain includes a time domain start time of a resource ranking first in time domain among the at least one resource. In FIG. 9, the first resource is a block including consecutive resources in time domain. Actually, the first resource may alternatively be a set of a plurality of resources, that is, the first resource includes a plurality of inconsecutive resources in time domain. The fifth time is an earliest moment of the available resources or the unavailable resources determined by the second terminal apparatus in time domain, that is, the start time. It can be learned from FIG. 9 that, in this case, the first time offset is a time difference between the fifth time and the first time, that is, the first time at which the second terminal apparatus sends the coordination information is obtained by offsetting the start time of the first resource in time domain as a reference time point by the first time offset.

The first time offset may be determined based on the capability of the first terminal apparatus or the second terminal apparatus. In other words, the capability of the first terminal apparatus or the second terminal apparatus needs to be considered for the first time at which the second terminal apparatus sends the coordination information. For example, when the capability of the first terminal apparatus or the second terminal apparatus is higher, that is, when the processing speed or the calculation speed is higher, a value of the first time offset may be smaller. The capability of the first terminal apparatus or the second terminal apparatus may be carried in the trigger information, thereby improving flexibility in determining the first time. Therefore, it is ensured that after receiving the coordination information, the first terminal apparatus has enough time to perform scheduling and encode and send the sidelink information, thereby avoiding a waste of the coordination information caused by an insufficient capability of the first terminal apparatus, and ensuring that the sidelink information of the first terminal apparatus can be sent in a timely manner.

Alternatively, the first time offset may be determined based on at least one of the following time:
(1) A period of time required for combining resources. In addition to receiving the coordination information of the second terminal apparatus, the first terminal apparatus may further receive coordination information sent by at least one other terminal apparatus. In this case, the first terminal apparatus needs to combine at least one resource that is indicated in the coordination information sent by the second terminal apparatus and the coordination information sent by the at least one other terminal apparatus and that is for determining a resource for sending the sidelink information by the first terminal apparatus. The resource combination takes a period of time. Therefore, the first time offset may be determined based on the time required for combining resources.
(2) A period of processing or transmission time required for reporting a result of the resource combination in (1) to a Media Access Control (Media Access Control, MAC) layer.
(3) A period of time for which the MAC layer determines a final resource selection result. To be specific, if the MAC layer receives the result of the resource combination in (2), the MAC layer determines, from the result of the resource combination, a resource to be finally used by the first terminal apparatus to send the sidelink information. This process takes a period of time. Therefore, the first time offset may be determined based on the time at which the MAC layer determines the final resource selection result.
(4) A period of time required for the MAC layer to indicate, to a physical layer of the first terminal apparatus, the resource that is to be finally used by the first terminal apparatus to send the sidelink information and that is determined in (3).
(5) A period of preparation time for sending of the sidelink information. After determining or obtaining the resource that is to be used to transmit the sidelink information, the first terminal apparatus needs to perform operations such as encoding and mapping on the to-be-sent sidelink information. A time for completing such operations is the preparation time for the sending of the sidelink information. Therefore, the first time offset may be determined based on the preparation time for the sending of the sidelink information.

In this case, at least one of the foregoing time may be carried in the trigger information, thereby improving flexibility in determining the first time.

Alternatively, the first time offset may be a predefined time offset. To be specific, a specific value of the first time offset is specified in a protocol. In this case, the specific value of the first time offset may be stored in a memory of the first terminal apparatus or the second terminal apparatus, and is invoked by the first terminal apparatus or the second terminal apparatus when the first time needs to be determined. When the specific value of the first time offset is specified in the protocol, system complexity is reduced.

The value of the first time offset may be n, where n is a negative integer, 0, or a positive integer. A measurement unit of the first time offset may be second or millisecond, or certainly, may be slot or symbol.

Step S62: The transceiver unit 82 of the second terminal apparatus sends the coordination information to the first terminal apparatus at the first time or before the first time, and the transceiver unit 72 of the first terminal apparatus receives the coordination information from the first terminal apparatus at the first time or before the first time. The coordination information indicates the first resource, and the first resource is for determining a second resource for receiving the sidelink information from the first terminal apparatus. The coordination information may include a bit map (bit map), and the bit map indicates the first resource. For example, if a bit in a bit string of the bit map is 1, it indicates that a resource corresponding to the bit may be used to transmit the sidelink information. A possible scenario is that the first terminal apparatus cannot sense a radio resource or another terminal apparatus due to various reasons, and the first terminal apparatus is relatively close to the second terminal apparatus. In this case, the first terminal apparatus may use the second terminal apparatus to perform sensing in place of the first terminal apparatus. In the trigger manner, the first terminal apparatus may send the trigger information to the second terminal apparatus to trigger the second terminal apparatus to perform sensing in place of the first terminal apparatus, and receive the coordination information sent by the second terminal apparatus. In the non-trigger manner, the first terminal apparatus receives the coordination information periodically or aperiodically sent by the second terminal apparatus. In this case, the first resource may be further used by the first terminal apparatus to determine a transmission resource to be used by the first terminal apparatus to send the sidelink information to the second terminal apparatus or a third terminal apparatus, for example, the third resource. The third terminal apparatus is a terminal apparatus different from the first terminal apparatus and the second terminal apparatus.

Step S63: The processing unit 71 of the first terminal apparatus determines the second resource based on the first resource, where the second resource is used by the transceiver unit 72 of the first terminal apparatus to send the sidelink information to the second terminal apparatus. Optionally, the processing unit 71 of the first terminal apparatus determines the third resource based on the first resource, where the third resource is used by the transceiver unit 72 of the first terminal apparatus to send the sidelink information to the third terminal apparatus.

Step S64: The transceiver unit 72 of the first terminal apparatus sends the sidelink information to the second terminal apparatus on the second resource, and the transceiver unit 82 of the second terminal apparatus receives the sidelink information from the first terminal apparatus on the second resource. The sidelink information includes at least one of sidelink control information, sidelink data, and sidelink feedback information. The transceiver unit 72 of the first terminal apparatus sends the sidelink information to the third terminal apparatus on the third resource.

The embodiment of FIG. 6 is described by using only one second terminal apparatus as an example. In an actual scenario, the first terminal apparatus may receive coordination information sent by a plurality of second terminal apparatuses, and the coordination information sent by each second terminal apparatus in the plurality of second terminal apparatuses indicates a sensing result of the second terminal apparatus sending the coordination information. Therefore, the first terminal apparatus may determine, based on a plurality of sensing results of the plurality of second terminal apparatuses, a transmission resource for sending the sidelink information.

Through embodiments of this application, the second terminal apparatus sends the coordination information to the first terminal apparatus at the first time or before the first time, and the first time is determined based on the first reference time and the first time offset, that is, a time at which the second terminal apparatus sends the coordination information to the first terminal apparatus is limited, to ensure that when the first terminal apparatus receives the coordination information, the first terminal apparatus has sufficient time to determine the second resource for sending the sidelink information, thereby improving reliability of sidelink communication.

FIG. 10 provides a specific example to describe the communication method in the embodiment of FIG. 6.

In a first step, the first terminal apparatus has to-be-sent sidelink data to be sent to the second terminal apparatus. In the sidelink resource determining manner in Mode-2b, the first terminal apparatus sends trigger information to the second terminal apparatus at a time n. The trigger information is for triggering the second terminal apparatus to sense a terminal apparatus or resource nearby. The trigger information carries at least a second time offset S, duration L of a resource selection window, and a first time offset y1. The second time offset is for determining a start time of the resource selection window. The second time offset and the duration of the resource selection window are for determining an end time of the resource selection window. The first terminal apparatus or the second terminal apparatus may determine, based on the moment n, S, and L, that the start time of the resource selection window for the first terminal apparatus is t₁, and the end time of the resource selection window for the first terminal apparatus is t₂.

In FIG. 10, determining of the first time is described by using an example in which the first reference time is the third time, that is, the start time t₁ of the resource selection window for the first terminal apparatus. The first terminal apparatus determines the first time n+s-y1 based on t₁ and the first time offset y 1, and the second terminal apparatus needs to send the coordination information to the first terminal apparatus at the first time n+s-y1 or before the first time n+s-y1.

In a second step, after receiving the trigger information, the second terminal apparatus performs resource selection, for example, at a time m, that is, senses a terminal apparatus or a resource in the vicinity of the second terminal apparatus.

In the second step, the second terminal apparatus first determines a resource for sending the coordination information. Then the second terminal apparatus determines a sensing window (m) and a resource selection window (m) based on the time m. The sensing window (m) and the resource selection window (m) are for determining a resource to be used by the second terminal apparatus to send the coordination information to the first terminal apparatus. A time range of the sensing window (m) is m-T₀ to m-T_{proc,0}, and a time range of the resource selection window (m) is m+T₁ to m+T₂, where T₀ is a start time offset of the sensing window configured for a resource pool; T_{proc,0} is a predefined basic capability of a terminal apparatus related to a subcarrier spacing in performing sensing; T₁ is a start time offset of the resource selection window that is determined by the terminal apparatus based on a device capability, and needs to meet 0 ≤T₁≤ *T*_{*proc,*1}*,* where *T*_{*proc,*1} is a predefined basic capability of the terminal apparatus related to the subcarrier spacing in encoding and sending the sidelink information; and T₂ is an end time offset of the resource selection window that is determined by the terminal device based on a device capability, and meets T₁ < *T2* ≤ *PDB,* where a packet delay budget (packet delay budget, PDB) indicates a time to live of the sidelink information, that is, the sidelink information needs to be sent before the PDB. Generally, the second terminal apparatus continuously senses a terminal apparatus or a channel resource nearby, and caches the sensing result. Once the second terminal apparatus determines the sensing window (m), the second terminal apparatus obtains, from the cache, the sensing result within the time range m-T₀ to m-T_{proc,0} corresponding to the sensing window (m). Then, a resource to be used by the second terminal apparatus to send the coordination information is determined in the resource selection window (m) based on the sensing result and/or a resource reservation status of the terminal apparatus nearby. As shown in FIG. 10, a time domain resource of the resource is a time z. To be specific, the second terminal apparatus sends, to the first terminal apparatus at the time z, the coordination information indicating the first resource, where the first resource may be used by the first terminal apparatus to determine a transmission resource for sending the sidelink information to the second terminal apparatus. In addition, the end time m+T₂ of the resource selection window (m) is before the first time n+s-y1, or the end time m+T₂ of the resource selection window (m) is the same as the first time n+s-y1, that is, m+T₂ <= n+s-y1. In this case, the time domain resource of the resource that is for sending the coordination information and that is determined within the time range m+T₁ to m+T₂ of the resource selection window (m), that is, the time z, needs to be before or equal to the first time n+s-y1.

In a third step, because the second terminal apparatus sends the coordination information to the first terminal apparatus at the time z, the second terminal apparatus needs to perform resource selection at a time k. A time interval between the time k and the time z is greater than or equal to a duration y2. y2 is a preparation time necessary for the second terminal apparatus to send the coordination information, and the preparation time needs to consider a necessary time for the second terminal apparatus to process the sensing result in a sensing window (k), and/or a time required for the second terminal apparatus to generate the coordination information and carry the sensing result in the coordination information, and encode and send the sidelink information.

In a fourth step, the second terminal apparatus determines the sensing window (k) and a resource selection window (k) based on the time k. The sensing window (k) is for determining a resource to be used by the second terminal apparatus to send the coordination information to the first terminal apparatus. The resource selection window (k) is not important in this case, because the resource selection window (k) is a resource selection window used by the second terminal apparatus to determine the transmission resource for the second terminal apparatus to send the sidelink information, but is not a resource selection window used by the first terminal apparatus to determine a transmission resource for the first terminal apparatus to send the sidelink information. Certainly, the resource selection window (k) may overlap the resource selection window for the first terminal apparatus in time domain, a time range of the sensing window (k) is k-T₀ to k-T_{proc,0}, and a time range of the resource selection window (k) is k+T₁ to k+T₂.

In a fifth step, the second terminal apparatus extracts the sensing result within the time range of the sensing window (k) from the sensing results cached by the second terminal apparatus to determine the first resource, and the second terminal apparatus sends the coordination information to the first terminal apparatus at the time z. The coordination information indicates the first resource.

In a sixth step, after receiving the coordination information from the second terminal apparatus, the first terminal apparatus obtains available resources or unavailable resources in the vicinity of the second terminal apparatus determined by the second terminal apparatus, that is, the first resource. Then, the first terminal apparatus determines the second resource based on the first resource and available resources or unavailable resources determined by the first terminal apparatus in the sensing window of the first terminal apparatus.

In a seventh step, the first terminal apparatus sends the sidelink information to the second terminal apparatus on the second resource.

A time at which the second terminal apparatus sends the coordination information needs to be before the first time n+s-y1 or equal to the first time n+s-y1, that is, a latest time at which the second terminal apparatus sends the coordination information is limited, thereby improving timeliness of the coordination information, ensuring that the first terminal apparatus has sufficient time to determine a sidelink information transmission resource after receiving the coordination information, and improving reliability of sidelink communication.

An embodiment of this application provides a communication apparatus. The communication apparatus may be a first terminal apparatus or a second terminal apparatus, and the communication apparatus may be a terminal device, or may be a chip or a circuit. The communication apparatus may be configured to perform actions performed by the first terminal apparatus or the second terminal apparatus in the above embodiments of this application.

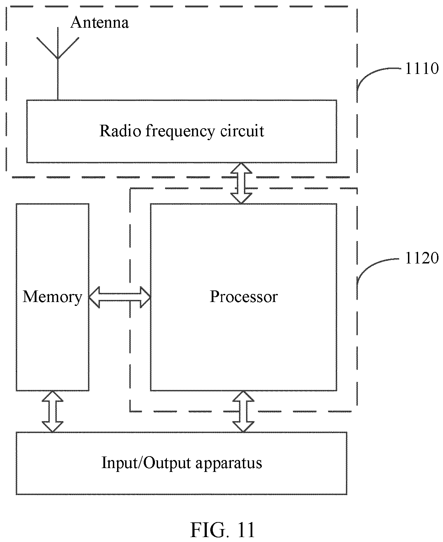

When the communication apparatus is a terminal apparatus, FIG. 11 is a simplified schematic diagram of a structure of the terminal apparatus. The terminal apparatus may be a vehicle, an on-board module, a handheld device, a mobile phone, or the like. As shown in FIG. 11, the terminal apparatus includes a processor, a memory, a radio frequency circuit, an antenna, and an input/output apparatus. The processor is mainly configured to process a communication protocol and communication data, control the terminal apparatus, execute a software program, process data of the software program, and so on. The memory is mainly configured to store the software program and data. The radio frequency circuit is mainly configured to perform conversion between a baseband signal and a radio frequency signal and process the radio frequency signal. The antenna is mainly configured to receive and send the radio frequency signal in a form of an electromagnetic wave. The input/output apparatus, for example, a touchscreen, a display, or a keyboard, is mainly configured to receive data entered by a user and output data to the user. It should be noted that some types of terminal apparatuses may not have an input/output apparatus, and some types of terminal apparatuses, for example, an on-board module, may include only at least one of the processor, the memory, the radio frequency circuit, the antenna, and the input/output apparatus, with the other parts being disposed outside the terminal apparatus and in communication connection with the terminal apparatus.

When needing to send data, after performing baseband processing on to-be-sent data, the processor outputs a baseband signal to the radio frequency circuit; and the radio frequency circuit performs radio frequency processing on the baseband signal and sends the radio frequency signal to outside in a form of an electromagnetic wave through the antenna. When data is sent to the terminal apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal apparatus product, there may be one or more processors and one or more memories. The memory may also be referred to as a storage medium, a storage apparatus, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal apparatus (where the transceiver unit may be one functional unit, and the functional unit can implement a sending function and a receiving function; or the transceiver unit may include two functional units: a receiving unit that can implement a receiving function and a sending unit that can implement a sending function), and the processor that has a processing function may be considered as a processing unit of the terminal apparatus. As shown in FIG. 11, the terminal apparatus includes a transceiver unit 1110 and a processing unit 1120. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitting machine, a transmitter, a transmit circuit, or the like.

It should be understood that the transceiver unit 1110 is configured to perform a sending step or a receiving operation of the first terminal apparatus or the second terminal apparatus in the foregoing method embodiments, and the processing unit 1120 is configured to perform operations other than the sending and receiving operations in the foregoing method embodiments.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application provides a communication system. The communication system may include the first terminal apparatus and the second terminal apparatus in the embodiment shown in FIG. 6.

An embodiment of this application further provides a computer-readable storage medium. The computer-readable storage medium stores a computer program. When the computer program is executed by a computer, the computer may implement the process related to the first terminal apparatus or the second terminal apparatus in the embodiment of FIG. 6 according to the above method embodiments.

An embodiment of this application further provides a computer program product. The computer program product is configured to store a computer program. When the computer program is executed by a computer, the computer may implement the process related to the first terminal apparatus or the second terminal apparatus in the embodiment of FIG. 6 according to the above method embodiments.

It should be understood that the processor mentioned in embodiments of this application may be a CPU, or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may also be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, or another programmable logic device, a discrete gate or a transistor logic device, or a discrete hardware component, the memory (a storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that for convenience and conciseness of description, for specific operation processes of the foregoing system, apparatus and unit, reference may be made to the corresponding processes in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementations. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer apparatus (which may be a personal computer, a server, or a network apparatus) to perform all or some of the steps of the methods described in embodiments of this application. The foregoing computer-readable storage medium may be any available medium that can be accessed by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage apparatus, or any other medium that can be for carrying or storing expected program code in a form of instructions or a data structure and that can be accessed by a computer.

The foregoing descriptions are merely specific implementations of this application, but are not intended to limit the protection scope of embodiments of this application. Any variation or replacement readily figured out by a person skilled in the art within the subject-matter as defined in the appended claims shall fall within the protection scope of embodiments of this application. Therefore, the protection scope of embodiments of this application shall be subject to the protection scope of the claims.

## Claims

1. A communication method, comprising:
sending, to a first terminal apparatus at a first time or before the first time, coordination information indicating a first resource, the first time is determined based on a first reference time and a first time offset, wherein the first resource is for determining a second resource for receiving sidelink information from the first terminal apparatus; and
the first reference time comprises a second time, a third time, a fourth time, or a fifth time;
the second time comprises a time at which trigger information is received from the first terminal apparatus, and the trigger information is for triggering determining of the first resource;
the third time comprises a start time of a resource selection window;
the fourth time comprises an end time of the resource selection window, and the resource selection window is for determining the second resource for receiving the sidelink information from the first terminal apparatus; and
the fifth time comprises a start time of the first resource in time domain.

2. The method according to claim 1, wherein the method further comprises:
receiving control information, sidelink radio resource control PC5-RRC signaling, or a Media Access Control control element MAC CE from the first terminal apparatus, wherein the control information, the sidelink radio resource control PC5-RRC signaling, or the Media Access Control control element MAC CE indicates the first time offset and/or the capability of the first terminal apparatus.

3. The method according to claim 1, wherein the method further comprises:
receiving, on the second resource, the sidelink information from the first terminal apparatus.

4. The method according to claim 1, wherein
the first time and the first time offset are measured in milliseconds or slots.

5. A communication method, comprising:
receiving coordination information from a second terminal apparatus at a first time or before the first time, the first time is determined based on a first reference time and a first time offset, wherein the coordination information indicates a first resource, and the first resource is for determining a second resource for sending sidelink information to the second terminal apparatus,
wherein the first reference time comprises a second time, a third time, a fourth time, or a fifth time;
the second time comprises a time of sending trigger information to the second terminal apparatus, wherein the trigger information is for triggering determining of the first resource;
the third time comprises a start time of a resource selection window;
the fourth time comprises an end time of the resource selection window, and the resource selection window is for determining the second resource for sending the sidelink information to the second terminal apparatus; and
the fifth time comprises a start time of the first resource in time domain.

6. The method according to claim 5, wherein the method further comprises:
sending control information, sidelink radio resource control PC5-RRC signaling, or a Media Access Control control element MAC CE to the second terminal apparatus, wherein the control information, the sidelink radio resource control PC5-RRC signaling, or the Media Access Control control element MAC CE indicates the first time offset and/or the capability of the first terminal apparatus.

7. The method according to claim 5, wherein the method further comprises:
sending, on the second resource, the sidelink information to the second terminal apparatus.

8. The method according to claim 5, wherein
the first time and the first time offset are measured in milliseconds or slots.

9. A second terminal apparatus, comprising:
a transceiver module, configured to send, to a first terminal apparatus at a first time or before the first time, coordination information indicating a first resource, the first time is determined based on a first reference time and a first time offset, wherein the first resource is for determining a second resource for receiving sidelink information from the first terminal apparatus, and
the first reference time comprises a second time, a third time, a fourth time, or a fifth time;
the second time comprises a time at which trigger information is received from the first terminal apparatus, and the trigger information is for triggering determining of the first resource;
the third time comprises a start time of a resource selection window;
the fourth time comprises an end time of the resource selection window, and the resource selection window is for determining the second resource for receiving the sidelink information from the first terminal apparatus; and
the fifth time comprises a start time of the first resource in time domain.

10. The apparatus according to claim 9, wherein
the transceiver module is further configured to receive control information, sidelink radio resource control PC5-RRC signaling, or a Media Access Control control element MAC CE from the first terminal apparatus, wherein the control information, the sidelink radio resource control PC5-RRC signaling, or the Media Access Control control element MAC CE indicates the first time offset and/or the capability of the first terminal apparatus.

11. The apparatus according to claim 9, wherein
the transceiver module is further configured to receive, on the second resource, the sidelink information from the first terminal apparatus.

12. The apparatus according to claim 9, wherein
the first time and the first time offset are measured in milliseconds or slots.

13. A first terminal apparatus, comprising:
a transceiver module, configured to receive, from a second terminal apparatus at a first time or before the first time, coordination information indicating a first resource, the first time is determined based on a first reference time and a first time offset, wherein the first resource is for determining a second resource for sending sidelink information to the second terminal apparatus;
the first reference time comprises a second time, a third time, a fourth time, or a fifth time;
the second time comprises a time of sending trigger information to the second terminal apparatus, wherein the trigger information is for triggering determining of the first resource;
the third time comprises a start time of a resource selection window;
the fourth time comprises an end time of the resource selection window, and the resource selection window is for determining the second resource for sending the sidelink information to the second terminal apparatus; and
the fifth time comprises a start time of the first resource in time domain.

14. The apparatus according to claim 13, wherein
the transceiver module is further configured to send control information, sidelink radio resource control PC5-RRC signaling, or a Media Access Control control element MAC CE to the second terminal apparatus, wherein the control information, the sidelink radio resource control PC5-RRC signaling, or the Media Access Control control element MAC CE indicates the first time offset and/or the capability of the first terminal apparatus.

15. The apparatus according to claim 13, wherein
the transceiver module is further configured to send, on the second resource, the sidelink information to the second terminal apparatus.

16. The apparatus according to claim 13, wherein
the first time and the first time offset are measured in milliseconds or slots.

17. A computer program comprising instructions, wherein when executed by a communications apparatus, the instructions cause the communications apparatus to perform the method according to any one of claims 1 to 4 or claims 5 to 8.

## Patentansprüche

1. Kommunikationsverfahren, umfassend:
Senden, zu einem ersten Zeitpunkt oder vor dem ersten Zeitpunkt, von Koordinationsinformationen, die eine erste Ressource angeben, an eine erste Endgerätevorrichtung, wobei der erste Zeitpunkt basierend auf einem ersten Referenzzeitpunkt und einem ersten Zeitversatz bestimmt wird, wobei die erste Ressource zum Bestimmen einer zweiten Ressource zum Empfangen von Sidelink-Informationen von der ersten Endgerätevorrichtung dient; und
der erste Referenzzeitpunkt einen zweiten Zeitpunkt, einen dritten Zeitpunkt, einen vierten Zeitpunkt oder einen fünften Zeitpunkt umfasst;
der zweite Zeitpunkt einen Zeitpunkt umfasst, zu welchem Trigger-Informationen von der ersten Endgerätevorrichtung empfangen werden und die Trigger-Informationen zum Triggern des Bestimmens der ersten Ressource dienen;
der dritte Zeitpunkt einen Startzeitpunkt eines Ressourcenauswahlfensters umfasst;
der vierte Zeitpunkt einen Endzeitpunkt des Ressourcenauswahlfensters umfasst und das Ressourcenauswahlfenster zum Bestimmen der zweiten Ressource zum Empfangen der Sidelink-Informationen von der ersten Endgerätevorrichtung dient; und
der fünfte Zeitpunkt einen Startzeitpunkt der ersten Ressource in der Zeitdomäne umfasst.

2. Verfahren nach Anspruch 1, wobei das Verfahren ferner Folgendes umfasst:
Empfangen von Steuerinformationen, einer Signalisierung der Sidelink-Funkressourcensteuerung, PC5-RRC-Signalisierung, oder eines Media-Access-Control-Steuerelements, MAC CE, von der ersten Endgerätevorrichtung, wobei die Steuerinformationen, die Signalisierung der Sidelink-Funkressourcensteuerung, PC5-RRC-Signalisierung, oder das Media-Access-Control-Steuerelement, MAC CE, den ersten Zeitversatz und/oder die Leistungsfähigkeit der ersten Endgerätevorrichtung angeben.

3. Verfahren nach Anspruch 1, wobei das Verfahren ferner Folgendes umfasst:
Empfangen, auf der zweiten Ressource, der Sidelink-Informationen von der ersten Endgerätevorrichtung.

4. Verfahren nach Anspruch 1, wobei
der erste Zeitpunkt und der erste Zeitversatz in Millisekunden oder Zeitschlitzen gemessen werden.

5. Kommunikationsverfahren, umfassend:
Empfangen von Koordinationsinformationen von einer zweiten Endgerätevorrichtung zu einem ersten Zeitpunkt oder vor dem ersten Zeitpunkt, wobei der erste Zeitpunkt basierend auf einem ersten Referenzzeitpunkt und einem ersten Zeitversatz bestimmt wird, wobei die Koordinationsinformationen eine erste Ressource angeben und die erste Ressource zum Bestimmen einer zweiten Ressource zum Senden von Sidelink-Informationen an die zweite Endgerätevorrichtung dient,
wobei der erste Referenzzeitpunkt einen zweiten Zeitpunkt, einen dritten Zeitpunkt, einen vierten Zeitpunkt oder einen fünften Zeitpunkt umfasst;
der zweite Zeitpunkt einen Zeitpunkt des Sendens von Trigger-Informationen an die zweite Endgerätevorrichtung umfasst, wobei die Trigger-Informationen zum Triggern des Bestimmens der ersten Ressource dienen;
der dritte Zeitpunkt einen Startzeitpunkt eines Ressourcenauswahlfensters umfasst;
der vierte Zeitpunkt einen Endzeitpunkt des Ressourcenauswahlfensters umfasst und das Ressourcenauswahlfenster zum Bestimmen der zweiten Ressource zum Senden der Sidelink-Informationen an die zweite Endgerätevorrichtung dient; und
der fünfte Zeitpunkt einen Startzeitpunkt der ersten Ressource in der Zeitdomäne umfasst.

6. Verfahren nach Anspruch 5, wobei das Verfahren ferner Folgendes umfasst:
Senden von Steuerinformationen, einer Signalisierung der Sidelink-Funkressourcensteuerung, PC5-RRC-Signalisierung, oder eines Media-Access-Control-Steuerelements, MAC CE, an die zweite Endgerätevorrichtung, wobei die Steuerinformationen, die Signalisierung der Sidelink-Funkressourcensteuerung, PC5-RRC-Signalisierung, oder das Media-Access-Control-Steuerelement, MAC CE, den ersten Zeitversatz und/oder die Leistungsfähigkeit der ersten Endgerätevorrichtung angeben.

7. Verfahren nach Anspruch 5, wobei das Verfahren ferner Folgendes umfasst:
Senden, auf der zweiten Ressource, der Sidelink-Informationen an die zweite Endgerätevorrichtung.

8. Verfahren nach Anspruch 5, wobei
der erste Zeitpunkt und der erste Zeitversatz in Millisekunden oder Zeitschlitzen gemessen werden.

9. Zweite Endgerätevorrichtung, umfassend:
ein Sende-Empfangsmodul, das dazu konfiguriert ist, zu einem ersten Zeitpunkt oder vor dem ersten Zeitpunkt, Koordinationsinformationen, die eine erste Ressource angeben, an eine erste Endgerätevorrichtung zu senden, wobei der erste Zeitpunkt basierend auf einem ersten Referenzzeitpunkt und einem ersten Zeitversatz bestimmt wird, wobei die erste Ressource zum Bestimmen einer zweiten Ressource zum Empfangen von Sidelink-Informationen von der ersten Endgerätevorrichtung dient, und der erste Referenzzeitpunkt einen zweiten Zeitpunkt, einen dritten Zeitpunkt, einen vierten Zeitpunkt oder einen fünften Zeitpunkt umfasst;
der zweite Zeitpunkt einen Zeitpunkt umfasst, zu welchem Trigger-Informationen von der ersten Endgerätevorrichtung empfangen werden und die Trigger-Informationen zum Triggern des Bestimmens der ersten Ressource dienen;
der dritte Zeitpunkt einen Startzeitpunkt eines Ressourcenauswahlfensters umfasst;
der vierte Zeitpunkt einen Endzeitpunkt des Ressourcenauswahlfensters umfasst und das Ressourcenauswahlfenster zum Bestimmen der zweiten Ressource zum Empfangen der Sidelink-Informationen von der ersten Endgerätevorrichtung dient; und
der fünfte Zeitpunkt einen Startzeitpunkt der ersten Ressource in der Zeitdomäne umfasst.

10. Vorrichtung nach Anspruch 9, wobei
das Sende-Empfangsmodul ferner dazu konfiguriert ist, Steuerinformationen, eine Signalisierung der Sidelink-Funkressourcensteuerung, PC5-RRC-Signalisierung, oder ein Media-Access-Control-Steuerelement, MAC CE, von der ersten Endgerätevorrichtung zu empfangen, wobei die Steuerinformationen, die Signalisierung der Sidelink-Funkressourcensteuerung, PC5-RRC-Signalisierung, oder das Media-Access-Control-Steuerelement, MAC CE, den ersten Zeitversatz und/oder die Leistungsfähigkeit der ersten Endgerätevorrichtung angeben.

11. Vorrichtung nach Anspruch 9, wobei
das Sende-Empfangsmodul ferner dazu konfiguriert ist, auf der zweiten Ressource die Sidelink-Informationen von der ersten Endgerätevorrichtung zu empfangen.

12. Vorrichtung nach Anspruch 9, wobei
der erste Zeitpunkt und der erste Zeitversatz in Millisekunden oder Zeitschlitzen gemessen werden.

13. Erste Endgerätevorrichtung, umfassend:
ein Sende-Empfangsmodul, das dazu konfiguriert ist, zu einem ersten Zeitpunkt oder vor dem ersten Zeitpunkt, Koordinationsinformationen, die eine erste Ressource angeben, von einer zweiten Endgerätevorrichtung zu empfangen, wobei der erste Zeitpunkt basierend auf einem ersten Referenzzeitpunkt und einem ersten Zeitversatz bestimmt wird, wobei die erste Ressource zum Bestimmen einer zweiten Ressource zum Senden von Sidelink-Informationen an die zweiten Endgerätevorrichtung dient;
der erste Referenzzeitpunkt einen zweiten Zeitpunkt, einen dritten Zeitpunkt, einen vierten Zeitpunkt oder einen fünften Zeitpunkt umfasst;
der zweite Zeitpunkt einen Zeitpunkt des Sendens von Trigger-Informationen an die zweite Endgerätevorrichtung umfasst, wobei die Trigger-Informationen zum Triggern des Bestimmens der ersten Ressource dienen;
der dritte Zeitpunkt einen Startzeitpunkt eines Ressourcenauswahlfensters umfasst;
der vierte Zeitpunkt einen Endzeitpunkt des Ressourcenauswahlfensters umfasst und das Ressourcenauswahlfenster zum Bestimmen der zweiten Ressource zum Senden der Sidelink-Informationen an die zweite Endgerätevorrichtung dient; und
der fünfte Zeitpunkt einen Startzeitpunkt der ersten Ressource in der Zeitdomäne umfasst.

14. Vorrichtung nach Anspruch 13, wobei
das Sende-Empfangsmodul ferner dazu konfiguriert ist, Steuerinformationen, eine Signalisierung der Sidelink-Funkressourcensteuerung, PC5-RRC-Signalisierung, oder ein Media-Access-Control-Steuerelement, MAC CE, an die zweite Endgerätevorrichtung zu senden, wobei die Steuerinformationen, die Signalisierung der Sidelink-Funkressourcensteuerung, PC5-RRC-Signalisierung, oder das Media-Access-Control-Steuerelement, MAC CE, den ersten Zeitversatz und/oder die Leistungsfähigkeit der ersten Endgerätevorrichtung angeben.

15. Vorrichtung nach Anspruch 13, wobei
das Sende-Empfangsmodul ferner dazu konfiguriert ist, auf der zweiten Ressource die Sidelink-Informationen an die zweite Endgerätevorrichtung zu senden.

16. Vorrichtung nach Anspruch 13, wobei
der erste Zeitpunkt und der erste Zeitversatz in Millisekunden oder Zeitschlitzen gemessen werden.

17. Computerprogramm, umfassend Anweisungen, wobei die Anweisungen bei Ausführung durch eine Kommunikationsvorrichtung bewirken, dass die Kommunikationsvorrichtung das Verfahren nach einem der Ansprüche 1 bis 4 oder der Ansprüche 5 bis 8 durchführt.

## Revendications

1. Procédé de communication, comprenant :
l'envoi, à un premier appareil terminal à un premier temps ou avant le premier temps, d'informations de coordination indiquant une première ressource, le premier temps est déterminé sur la base d'un premier temps de référence et d'un premier décalage temporel, dans lequel la première ressource est destinée à déterminer une seconde ressource pour recevoir des informations de liaison latérale à partir du premier appareil terminal ; et
le premier temps de référence comprend un deuxième temps, un troisième temps, un quatrième temps, ou un cinquième temps ;
le deuxième temps comprend un temps auquel des informations de déclenchement sont reçues à partir du premier appareil terminal, et les informations de déclenchement sont destinées à déclencher la détermination de la première ressource ;
le troisième temps comprend un temps de début d'une fenêtre de sélection de ressource ;
le quatrième temps comprend un temps de fin de la fenêtre de sélection de ressource, et la fenêtre de sélection de ressource est destinée à déterminer la seconde ressource pour recevoir les informations de liaison latérale à partir du premier appareil terminal ; et
le cinquième temps comprend un temps de début de la première ressource dans le domaine temporel.

2. Procédé selon la revendication 1, dans lequel le procédé comprend également :
la réception d'informations de commande, d'une signalisation de commande de ressource radio PC5-RRC de liaison latérale, ou d'un élément de commande de commande d'accès au support CE MAC à partir du premier appareil terminal, dans lequel les informations de commande, la signalisation de commande de ressource radio PC5-RRC de liaison latérale, ou l'élément de commande de commande d'accès au support CE MAC indiquent le premier décalage temporel et/ou la capacité du premier appareil terminal.

3. Procédé selon la revendication 1, dans lequel le procédé comprend également :
la réception, sur la seconde ressource, des informations de liaison latérale à partir du premier appareil terminal.

4. Procédé selon la revendication 1, dans lequel
le premier temps et le premier décalage temporel sont mesurés en millisecondes ou intervalles.

5. Procédé de communication, comprenant :
la réception d'informations de coordination à partir d'un second appareil terminal à un premier temps ou avant le premier temps, le premier temps est déterminé sur la base d'un premier temps de référence et d'un premier décalage temporel, dans lequel les informations de coordination indiquent une première ressource, et la première ressource est destinée à déterminer une seconde ressource pour envoyer des informations de liaison latérale au second appareil terminal,
dans lequel le premier temps de référence comprend un deuxième temps, un troisième temps, un quatrième temps, ou un cinquième temps ;
le deuxième temps comprend un temps d'envoi d'informations de déclenchement au second appareil terminal, dans lequel les informations de déclenchement sont destinées à déclencher la détermination de la première ressource ;
le troisième temps comprend un temps de début d'une fenêtre de sélection de ressource ;
le quatrième temps comprend un temps de fin de la fenêtre de sélection de ressource, et la fenêtre de sélection de ressource est destinée à déterminer la seconde ressource pour envoyer les informations de liaison latérale au second appareil terminal ; et
le cinquième temps comprend un temps de début de la première ressource dans le domaine temporel.

6. Procédé selon la revendication 5, dans lequel le procédé comprend également :
l'envoi d'informations de commande, d'une signalisation de commande de ressource radio PC5-RRC de liaison latérale, ou d'un élément de commande de commande d'accès au support CE MAC au second appareil terminal, dans lequel les informations de commande, la signalisation de commande de ressource radio PC5-RRC de liaison latérale, ou l'élément de commande de commande d'accès au support CE MAC indiquent le premier décalage temporel et/ou la capacité du premier appareil terminal.

7. Procédé selon la revendication 5, dans lequel le procédé comprend également :
l'envoi, sur la seconde ressource, des informations de liaison latérale au second appareil terminal.

8. Procédé selon la revendication 5, dans lequel
le premier temps et le premier décalage temporel sont mesurés en millisecondes ou intervalles.

9. Second appareil terminal, comprenant :
un module émetteur-récepteur, configuré pour envoyer, à un premier appareil terminal à un premier temps ou avant le premier temps, des informations de coordination indiquant une première ressource, le premier temps est déterminé sur la base d'un premier temps de référence et d'un premier décalage temporel, dans lequel la première ressource est destinée à déterminer une seconde ressource pour recevoir des informations de liaison latérale à partir du premier appareil terminal ; et
le premier temps de référence comprend un deuxième temps, un troisième temps, un quatrième temps, ou un cinquième temps ;
le deuxième temps comprend un temps auquel des informations de déclenchement sont reçues à partir du premier appareil terminal, et les informations de déclenchement sont destinées à déclencher la détermination de la première ressource ;
le troisième temps comprend un temps de début d'une fenêtre de sélection de ressource ;
le quatrième temps comprend un temps de fin de la fenêtre de sélection de ressource, et la fenêtre de sélection de ressource est destinée à déterminer la seconde ressource pour recevoir les informations de liaison latérale à partir du premier appareil terminal ; et
le cinquième temps comprend un temps de début de la première ressource dans le domaine temporel.

10. Appareil selon la revendication 9, dans lequel
le module émetteur-récepteur est également configuré pour recevoir des informations de commande, une signalisation de commande de ressource radio PC5-RRC de liaison latérale, ou un élément de commande de commande d'accès au support CE MAC à partir du premier appareil terminal, dans lequel les informations de commande, la signalisation de commande de ressource radio PC5-RRC de liaison latérale, ou l'élément de commande de commande d'accès au support CE MAC indiquent le premier décalage temporel et/ou la capacité du premier appareil terminal.

11. Appareil selon la revendication 9, dans lequel
le module émetteur-récepteur est également configuré pour recevoir, sur la seconde ressource, les informations de liaison latérale à partir du premier appareil terminal.

12. Appareil selon la revendication 9, dans lequel
le premier temps et le premier décalage temporel sont mesurés en millisecondes ou intervalles.

13. Premier appareil terminal comprenant :
un module émetteur-récepteur, configuré pour recevoir, à partir d'un second appareil terminal à un premier temps ou avant le premier temps, des informations de coordination indiquant une première ressource, le premier temps est déterminé sur la base d'un premier temps de référence et d'un premier décalage temporel, dans lequel la première ressource est destinée à déterminer une seconde ressource pour envoyer des informations de liaison latérale au second appareil terminal ;
le premier temps de référence comprend un deuxième temps, un troisième temps, un quatrième temps, ou un cinquième temps ;
le deuxième temps comprend un temps d'envoi d'informations de déclenchement au second appareil terminal, dans lequel les informations de déclenchement sont destinées à déclencher la détermination de la première ressource ;
le troisième temps comprend un temps de début d'une fenêtre de sélection de ressource ;
le quatrième temps comprend un temps de fin de la fenêtre de sélection de ressource, et la fenêtre de sélection de ressource est destinée à déterminer la seconde ressource pour envoyer les informations de liaison latérale au second appareil terminal ; et
le cinquième temps comprend un temps de début de la première ressource dans le domaine temporel.

14. Appareil selon la revendication 13, dans lequel
le module émetteur-récepteur est également configuré pour envoyer des informations de commande, une signalisation de commande de ressource radio PC5-RRC de liaison latérale, ou un élément de commande de commande d'accès au support CE MAC au second appareil terminal, dans lequel les informations de commande, la signalisation de commande de ressource radio PC5-RRC de liaison latérale, ou l'élément de commande de commande d'accès au support CE MAC indiquent le premier décalage temporel et/ou la capacité du premier appareil terminal.

15. Appareil selon la revendication 13, dans lequel
le module émetteur-récepteur est également configuré pour envoyer, sur la seconde ressource, les informations de liaison latérale au second appareil terminal.

16. Appareil selon la revendication 13, dans lequel
le premier temps et le premier décalage temporel sont mesurés en millisecondes ou intervalles.

17. Programme informatique comprenant des instructions, dans lequel lorsqu'elles sont exécutées par un appareil de communication, les instructions amènent l'appareil de communication à réaliser le procédé selon l'une quelconque des revendications 1 à 4 ou des revendications 5 à 8.
